# EUROPÄISCHE PATENTSCHRIFT

(11) **EP 2 726 267 B1**
(45) Veröffentlichungstag und Bekanntmachung des Hinweises auf die Patenterteilung: **10.05.2017**
(21) Anmeldenummer: 12733055.3
(22) Anmeldetag: 28.06.2012
(51) Int. Cl.: B29C 45/16, B29C 45/04

(54) **DREHVORRICHTUNG FÜR EINE SPRITZGIESSVORRICHTUNG**
ROTATION DEVICE FOR AN INJECTION-MOLDING DEVICE
DISPOSITIF DE ROTATION POUR UN DISPOSITIF DE MOULAGE PAR INJECTION

(30) Priorität: 29.06.2011 CH 10952011
(43) Veröffentlichungstag der Anmeldung: 07.05.2014
(73) Patentinhaber: FOBOHA GmbH, D-77716 Haslach (DE)
(72) Erfinder: ARMBRUSTER, Rainer, 77709 Wolfach (DE)
(74) Vertreter: Rentsch Partner AG
(86) Internationale Anmeldenummer: PCT/EP2012/062602
(87) Internationale Veröffentlichungsnummer: WO 2013/001022

(56) Entgegenhaltungen:
- EP-A1- 1 277 557
- WO-A1-99/28108
- DE-U1-202004 020 290
- JP-A- 2007 152 820
- US-A- 3 319 300
- US-A1- 2007 065 536
- US-A1- 2008 199 555
- US-B1- 6 613 262
- SORS L: "SPRITZGIESSWERKZEUGE FUER ZWEIFARBIGE KUNSTSTOFFTEILE", KUNSTOFFE INTERNATIONAL, CARL HANSER VERLAG, MUNCHEN, DE, Bd. 69, Nr. 7, 1. Juli 1979 (1979-07-01), Seite 383/384, XP001173706, ISSN: 0023-5563

## Beschreibung

Die vorliegende Erfindung liegt auf dem Gebiet der Vorrichtungen zum Spritzgiessen von Materialien, insbesondere Teilen aus Kunststoff. Die Erfindung liegt insbesondere auf dem Gebiet von Spritzgiessvorrichtungen mit einer Drehvorrichtung zum Drehen eines oder mehreren Mittelblöcke in einer Spritzgiessvorrichtung. Aus dem Stand der Technik sind Spritzgiessvorrichtungen zum Spritzgiessen mit einem oder mehreren drehenden Mittelteilen bekannt, die 90° oder 180° um eine Achse gedreht werden. Diese werden z. B. zur effizienten Herstellung von mehrkomponentigen Kunststoffteilen verwendet. Zwischen zwei entlang von Holmen gegeneinander verfahrbaren Aufspannplatten für erste und zweite Formhälften ist mindestens ein drehbarer Mittelteil (Mittelblock) vorgesehen. Der Mittelblock wird durch eine Haltevorrichtung an den Holmen und/oder gegenüber einem Maschinenbett vorzugsweise beweglich gelagert und ist durch eine Drehvorrichtung um eine Drehachse drehbar angeordnet. Der drehbare Mittelblock weist mindestens zwei Seitenflächen zur Aufnahme von dritten Formhälften auf, die mit der ersten und der zweiten Formhälfte zur Bildung von Kavitäten zusammenwirken. In gewissen Ausführungsformen kann der drehbare Mittelblock zumindest auf einer Seite mit einem weiteren drehbaren Mittelteil zusammenwirken.

Um die Funktion zu gewährleisten ist es in der Regel erforderlich, dass der drehbare Mittelteil während dem Betrieb der Vorrichtung kontinuierlich mit einem oder mehreren Medien versorgt wird. Hierzu können Wasser, Luft, Öl sowie elektrischer Strom, respektive Daten, z.B. in Form von Messwerten gehören. Ein Problem besteht dabei darin, dass eines oder mehrere Medien von der feststehenden Halterung auf den drehbaren Mittelteil übergeben werden muss. Bei den aus dem Stand der Technik bekannten Vorrichtungen erfolgt die Übergabe der flüssigen oder gasförmigen Medien durch ringförmige, parallel nebeneinander auf einer Welle und/oder in einer korrespondierend ausgebildeten Bohrung angeordnete Nuten, welche durch Dichtungen voneinander getrennt sind. Insgesamt können mehr als 20 Kreisläufe erforderlich sein, um eine ausreichende Medienversorgung zu gewährleisten.

Ein Problem der aus dem Stand der Technik bekannten Übergabevorrichtungen besteht darin, dass diese vergleichsweise gross bauen und einen komplizierten Aufbau aufweisen. Häufig sind unterhalb und oberhalb des Mittelteils eine Übergabevorrichtung angeordnet, welche erheblich über den drehbaren Mittelteil vorstehen und damit viel Platz beanspruchen.

WO9928108 derselben Anmelderin befasst sich mit einer Haltevorrichtung für einen drehbaren Mittelteil. Die Haltevorrichtung weist zwei an Holmen abgestützte Traversen auf, welche je eine Dreheinheit tragen. Zwischen den Dreheinheiten kann ein drehbarer Mittelteil eingespannt werden. Die Übergabe von Medien erfolgt über die Drehachse zumindest einer Dreheinheit, welche ausserhalb des drehbaren Mittelteils angeordnet ist.

US7922477 wurde im Namen der Fa. Sidel hinterlegt und beschreibt eine Form einer Dreheinrichtung für eine Horizontalspritzgiessmaschine. Die Dreheinrichtung umfasst eine Grundplatte, auf der ein um eine vertikale Achse drehbarer Drehteller angeordnet ist, sowie Antriebsmittel zum Drehen des Drehtellers. Die Dreheinheit weist eine Mehrzahl von Medienleitungen auf, die im Innern der Achse angeordnet sind. Eine Aufgabe besteht darin, die Grösse und das Volumen der Dreheinrichtung zu reduzieren.

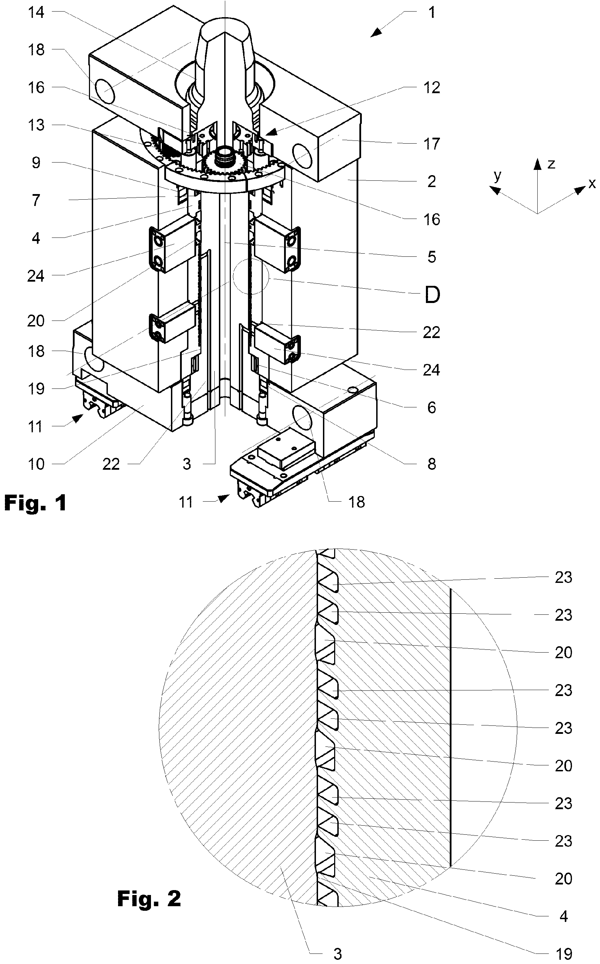

US6132201 wurde im Namen der Fa. Husky hinterlegt und beschreibt eine Spritzgiessmaschine. Ein Mittelteil ist um eine horizontale Achse drehbar angeordnet. In Fig. 2 ist ein drehbarer Mehrfachverteiler in der aus dem Stand der Technik bekannten Art und Weise seitlich neben und ausserhalb des drehbaren Mittelteils angeordnet.

EP0511564 wurde im Namen der Fa. Krupp Corpoplast hinterlegt und befasst sich mit einer Vorrichtung zur Blasverformung von Kunststoff. Die Vorrichtung zur Blasverformung von einem thermoplastischen Kunststoff weist eine Heizeinrichtung zur Temperierung von Vorformlingen und eine Blaseinrichtung zur Blasverformung der Vorformlingen auf. Eine Steuerscheibe weist Nuten auf, die im Wesentlichen konzentrisch zu einer Mittellinie angeordnet sind. Die Nuten dienen sowohl zur Druckzufuhr als auch zur Druckabfuhr.

WO2005035218 wurde im Namen der Fa. Krauss-Maffei Kunststofftechnik AG hinterlegt und befasst sich mit einer Horizontalspritzgiessmaschine mit Dreheinrichtung. Die Dreheinrichtung ist auf einem Maschinenbett zwischen den Holmen einer Spritzgiessmaschine gelagert. Die Dreheinrichtung ist ortsfest angeordnet. Zwar wird die Medienzufuhr zum drehbaren Mittelteil auf Seite 3 erwähnt, doch kann der Fachmann keine weiteren diesbezüglich relevante Details entnehmen.

L. Sorts: Spritzgiesswerkzeuge für zweifarbige Kunststoffe, 2376 Kunststoffe, Vol. 69(1979) Juli, N° 7, München, zeigt ein Werkzeug, das die Herstellung eines zweifarbigen Kunststoffteils in einem Arbeitsgang erlaubt. Zunächst wird der innere Mantel gespritzt. Nach dem Öffnen von zwei Halbschalen wird ein Mittelteil um 180° gedreht und die Halbschalen werden geschlossen, um eine zweite Farbe auf den noch warmen Mantel zu spritzen.

Die US 2007/065536 A1 zeigt eine Kühleinrichtung für Spritzgiesswerkzeuge in Spritzgiessmaschinen. Die Kühleinrichtung hat einen rotierbaren Kühlkopf, der im männlichen Teil des Spritzgiesswerkzeugs angeordnet ist. Ein axialer Schaft ist verschiebbar in einem Lager des männlichen Teils geführt. Am hinteren Ende des axialen Schafts ist ein Zahnrad angebracht. Der axiale Schaft ist auf einem inneren Rohr geführt, das an der Basisplatte des männlichen Teils angebracht ist. Eine Vorschubplatte ist am hinteren Teil des Zahnrads vorgesehen. Die Vorschubplatte kann durch Stäbe, die an der Spritzgiessmaschine angebracht sind, axial verschoben werden. Wenn der weibliche Teil vom männlichen Teil getrennt ist, können die Vorschubplatte, der axiale Schaft und der Kühlkopf axial verschoben werden. Das Zahnrad kann mit dem am männlichen Teil angebrachten Antrieb über die Zahnstange angetrieben werden, wodurch der Kühlkopf gedreht werden kann. US6613262 B1 zeigt eine Vorrichtung gemäß dem Oberbegriff des Anspruchs 1. Eine Aufgabe der Erfindung besteht darin, eine verbesserte Vorrichtung umfassend einen Mittelteil und eine Drehvorrichtung zum Drehen des Mittelteils in einer Spritzgiessvorrichtung zu zeigen, welche eine Platzsparende Konstruktion aufweisen und eine vereinfachte, kostengünstigere Fertigung erlaubt.

Diese Aufgabe wird durch die in dem unabhängigen Patentanspruch 1 definierte Vorrichtung gelöst. Vorteilhafte Ausführungsformen und verschiedene Alternativen gehen aus den Unteransprüchen hervor.

Eine Ausführungsform der erfindungsgemässen Vorrichtung weist eine im Innern des Mittelteils in der Regel drehfest angeordnete Säule auf, die von einer mit dem Mittelteil mitrotierenden Hülse umgeben ist. Die Hülse und die Säule sind über einen Antrieb wirkverbunden, mittels dem der Mittelteil gegenüber der Säule gedreht werden kann. Die Hülse kann in fest in das drehende Mittelteil integriert sein. Zwischen der Säule und der Hülse können Nuten angeordnet sein, welche zum Austausch von flüssigen und/oder gasförmigen Medien zwischen der Säule und dem Mittelteil dienen. Weitere Nuten können zur Aufnahme von Dichtungsringen vorhanden sein. Die Säule kann in Längsrichtung der Säule verlaufende erste Kanäle aufweisen, welche mit den Nuten in Wirkverbindung stehen und zum Transport von Medien dienen. Die Hülse kann zweite Kanäle aufweisen, welche z.B. mit Aktuatoren und/oder Kühlkreisläufen in Verbindung stehen. Der Antrieb ist mit Vorteil im Bereich eines oberen und/oder eines unteren Säulenendes angeordnet. Bei Bedarf kann mehr als ein Antrieb vorgesehen werden. Z.B. können der Mittelteil in vertikaler Richtung unterteilt sein, so dass die beiden Teile zwar auf derselben Säule gelagert sind, aber unabhängig voneinander gedreht werden können. Der Antrieb umfasst in der Regel einen Motor und ein Getriebe. Das Getriebe ist mit Vorteil als Planetengetriebe ausgestaltet, welches das Antriebsmoment verteilt über mehrere Planetenräder überträgt. Insbesondere bei schrittweisem Bewegen des Mittelteils werden die Abnutzung der Zahnräder und die Belastung der Lager reduziert. Durch das Planetengetrieben kann das Übersetzungsverhältnis zudem einfach eingestellt werden. Alternativ oder in Ergänzung können andere Antriebe, z.B. mit einem Zahnriemen, usw., vorgesehen werden. Als Antriebsmittel dienen in der Regel Elektro- und/oder Hydraulikmotoren. Erfindungsgemäß mündet die Säule am unteren Ende in einen Sockel, der Linearführungen oder Linearlager aufweist, so dass der Sockel auf einem Maschinenbett und/oder an Holmen einer Spritzgiessmaschine gelagert ist. Die Säule und/oder die Hülse können bei Bedarf mehrteilig ausgestaltet sein. Zwischen der Säule und der Hülse sind Lager angeordnet. Der oder die für den Antrieb zuständigen Motoren können unterhalb und/oder oberhalb der Säule angeordnet sein. Alternativ oder in Ergänzung kann ein Motor mit dem Mittelteil mitdrehend angeordnet ist. Z.B. kann dieser im Innern des Mittelteils angeordnet sein. Eine erfindungsgemässe Drehvorrichtung kann als Teil einer Spritzgiessmaschine ausgestaltet sein. Alternativ oder in Ergänzung kann eine Drehvorrichtung in ein Spritzgiesswerkzeug integriert sein, das in eine Spritzgiessmaschine eingesetzt werden kann.

In einer Ausführungsform kann die Verbindung zwischen dem drehbaren Mittelteil und der Säule und/oder der Säule und ihrem Sockel und/oder dem Sockel und dem Maschinenbett und/oder den Holmen einer Spritzgiessmaschine einfach gelöst werden, so dass die Drehvorrichtung und/oder Bestandteile davon einfach austauschbar sind.

Ein Vorteil der Erfindung besteht darin, dass durch die im Innern angeordnete Säule u.a. die rotierende Masse reduziert werden kann, was sich positiv - aufgrund des geringeren Materialverbrauchs - auf die Herstellungskosten und den Betrieb der Anlage auswirken. Ein weiterer Vorteil besteht darin, dass die Vorrichtung wesentlich kompakter baut, da für das Drehen und für die Übergabe der Medien notwendigen Teile ins Innere des Mittelteils verlegt sind.

Bevorzugte Ausführungsformen der Erfindung werden im Folgenden anhand der Zeichnungen dargestellt, die lediglich zur Erläuterung dienen und nicht einschränkend auszulegen sind. Aus den Zeichnungen offenbar werdende Merkmale der Erfindung sollen einzeln und in jeder Kombination als zur Offenbarung der Erfindung gehörend betrachtet werden. In den Zeichnungen zeigen:
- Fig. 1: eine erste Ausführungsform einer Vorrichtung mit einer zweiseitigen Lagerung von schräg oben;
- Fig. 2: Detail D aus Figur 1 in einer vergrösserten Darstellung;
- Fig. 3: die Vorrichtung gemäss Figur 1 von schräg unten; eine zweite Ausführungsform einer Vorrichtung von schräg oben.
- Fig. 4:

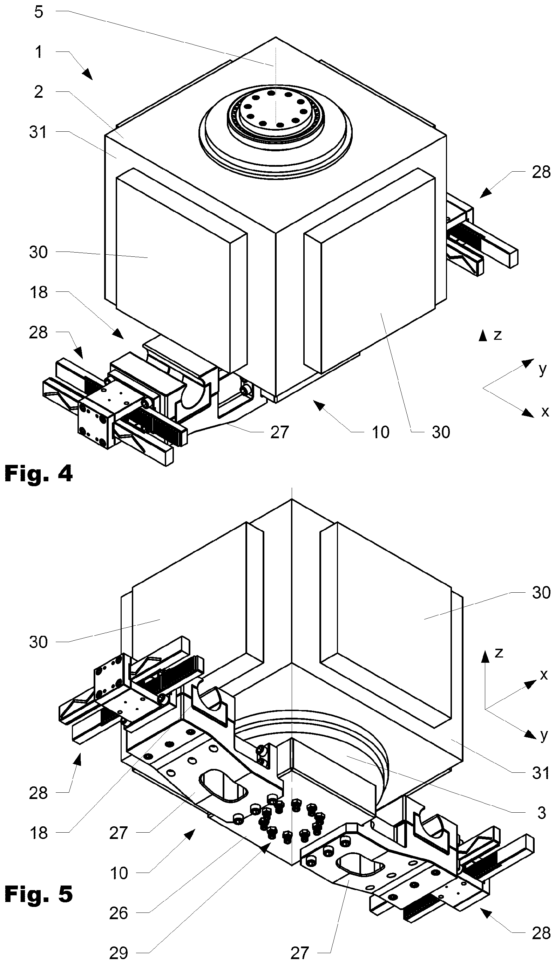

- Fig. 5: die Vorrichtung gemäss Fig. 4 von schräg unten;

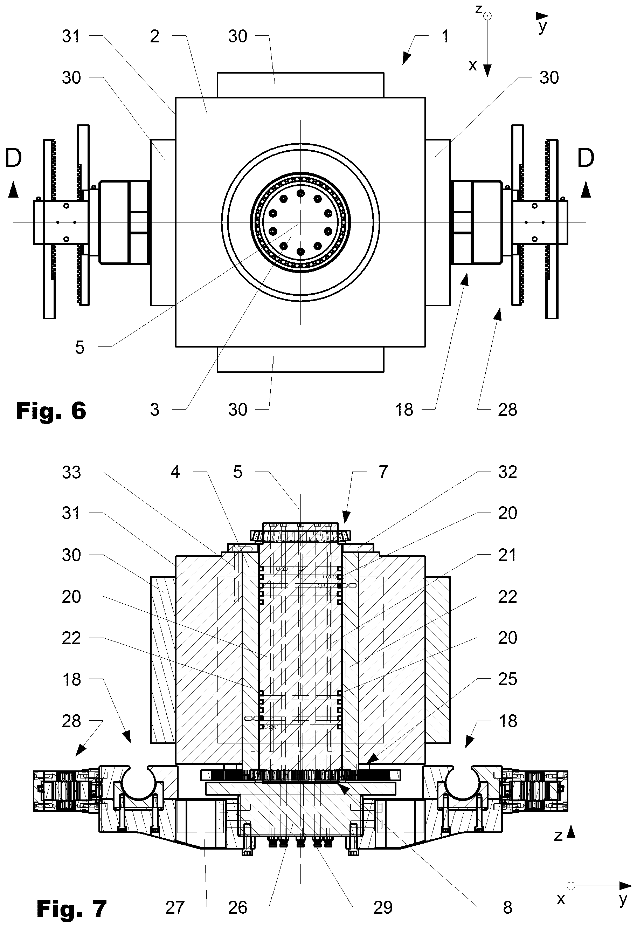

- Fig. 6: die Vorrichtung gemäss Fig. 4 in einer Draufsicht;
- Fig. 7: die Vorrichtung in einer Schnittdarstellung entlang der Schnittlinie gemäss Fig. 6;

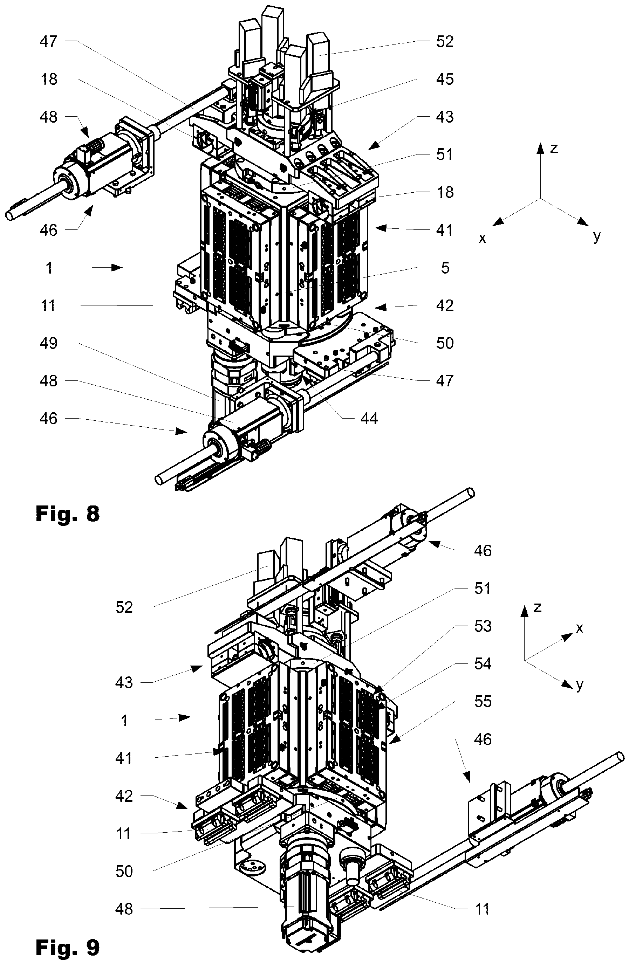

- Fig. 8: eine Ausführungsform einer Haltevorrichtung für einen Mittelblock von schräg oben;
- Fig. 9: die Haltevorrichtung gemäss Figur 8 von schräg unten.

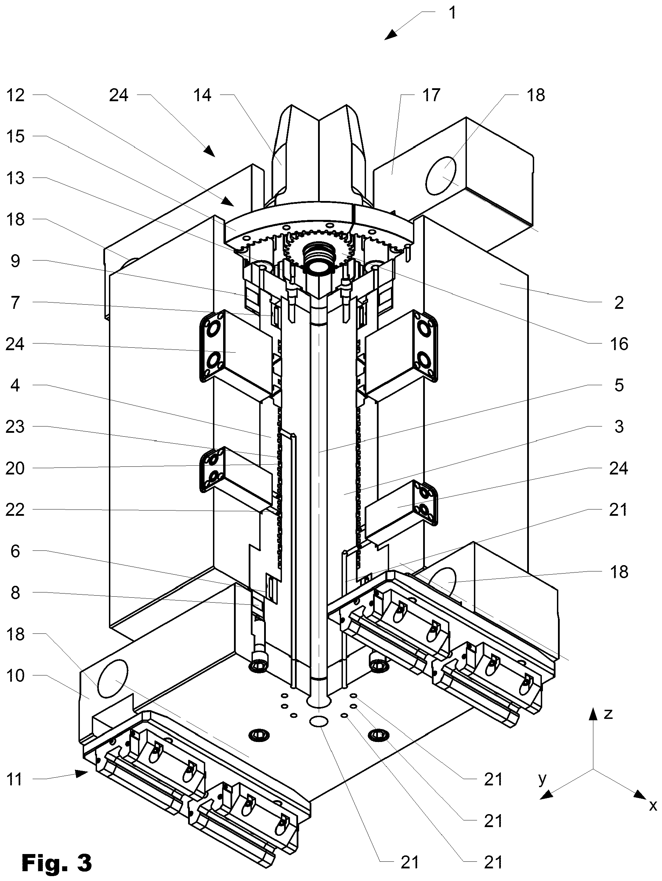

**Figur 1** zeigt eine erste Ausführungsform einer erfindungsgemässen Drehvorrichtung 1 mit Mittelteil 2 einer Spritzgiessmaschine (nicht im Detail dargestellt). **Figur 3** zeigt dieselbe Drehvorrichtung 1 von schräg unten. In beiden Figuren ist die Drehvorrichtung 1 teilweise geschnitten dargestellt, so dass das Innenleben sichtbar wird. **Figur 2** zeigt Detail D aus Figur 1 in einer vergrösserten Darstellung.

Die Drehvorrichtung 1 weist eine zentrale Säule 3 auf, um welche der Mittelteil 2 drehbar gelagert angeordnet ist. Die Säule 3 ist in der gezeigten Ausführungsform von einer Hülse 4 umgeben, welche gegenüber der Säule 3 um eine Drehachse 5 drehbar angeordnet ist.

Die Hülse 4, respektive der Mittelteil 2 ist mit der Säule 3 über ein erstes und ein zweites Radiallager 6, 7, sowie ein erstes und ein zweites Axiallager 8, 9 wirkverbunden, welche Kräfte zwischen feststehenden und beweglichen Teilen aufnehmen.

Auf der Unterseite geht die Säule 3 in einen Sockel 10 über, welcher gegenüber einem Maschinenbett und/oder Holmen einer Spritzgiessmaschine (beide nicht weiter dargestellt) gelagert ist. In der Regel ist der Sockel 10 über Linearführungen 11 in Längsrichtung der Spritzgiessmaschine gelagert. Alternativ oder in Ergänzung kann die Drehvorrichtung an den unteren beiden Holmen der Spritzgiessmaschine gelagert sein.

Am oberen Ende der Säule 3 ist in der gezeigten Ausführungsform ein Getriebe 12 angeordnet, über welches der Mittelteil 2 gegenüber der feststehenden Säule 3 antreibbar ist. Das Getriebe 12 ist hier als Planetengetriebe aufgebaut mit einem aussenverzahnten Sonnenrad 13, welches mit einem Motor 14 wirkverbunden ist, einem mit dem drehbaren Mittelteil 2 wirkverbundenen Hohlrad 15 und dazwischen angeordneten Planetenrädern 16. Der Motor 14 und das Getriebe 12 bilden gemeinsam einen Antrieb 24 des Mittelteils 2. Die Planetenräder 16 sind in der gezeigten Ausführungsform gegenüber der Säule 3 ortsfest angebracht. Ein Rotation des Sonnenrades 13 wird über die mehreren Planetenräder 16 auf das Hohlrad 15 und von diesem auf das Mittelteil 2 übertragen. Ein Vorteil besteht darin, dass durch die mehreren Planetenräder 16 das Antriebsmoment verteilt vom Sonnenrad 13 auf das Hohlrad 15 übertragen wird. Je nach Ausführungsform kann das Getriebe auch an einem anderen Ort platziert sein. Z.B. besteht die Möglichkeit den Motor unterhalb der Säule anzuordnen und das Antriebsmoment über eine in einer Bohrung der Säule 3 angeordnete Welle auf das Sonnerad 13 zu übertragen.

Der Motor 14 und das Getriebe 12 sind in eine obere Traverse 17 integriert, welche in montiertem Zustand mit den Holmen einer Spritzgiessmaschine oder anderen Führungsmittel wirkverbunden wird. Die obere Traverse 17 weist zu diesem Zweck schematisch angedeutete Linearlager 18 auf, welche Wirkverbindung mit den Holmen einer Spritzgiessmaschine gedacht sind. Je nach Ausführungsform können die Linearlager 18 auch einseitig geöffnet ausgestaltet sein. In der gezeigten Ausführungsform ist auch die untere Traverse 10 mit Linearlagern 18 versehen.

Für den Austausch von flüssigen und/oder gasförmigen Medien zwischen den rotierenden und nichtrotierenden Teilen, sind auf einer Innenwand 19 der Hülse 4 erste Nuten 20 angeordnet, welche mit säulenseitigen ersten und hülsenseitigen zweiten Kanälen 22, 23 verbunden sind, durch welche Medien dem Mittelteil 2 zu- und/oder abgeführt werden können. Ein Vorteil der Vorrichtung besteht darin. Wie am besten in der vergrösserten Darstellung gemäss **Figur 2** zu erkennen ist, sind zwischen den ersten Nuten 20, zweite, ringförmig umlaufende Nuten 23 angeordnet, welche zur Aufnahme von Dichtungsringen dienen (nicht näher dargestellt). Der besseren Verständlichkeit halber sind die Schnittflächen in **Figur 2** schraffiert dargestellt. Die zweiten Kanäle 22 sind z.B. mit Aktuatoren 24 oder Kühlkreisläufen innerhalb des drehbaren Mittelteils 2 wirkverbunden.

**Figur 4** zeigt eine weitere Ausführungsform einer erfindungsgemässen Vorrichtung 1 in einer Darstellung von schräg oben. **Figur 5** zeigt dieselbe Vorrichtung von schräg unten und **Figur 6** von oben. **Figur 7** zeigt die Vorrichtung in einer Schnittdarstellung entlang der Schnittlinie DD gemäss **Figur 6****.** Für die grundlegende Beschreibung der Funktionsweise wird auf die Beschreibung der vorangehenden Figuren verwiesen. Identische Teile sind mit denselben Bezugszeichen versehen. Die Drehvorrichtung 1 weist in der dargestellten Ausführungsform keine obere Traverse auf sondern ist freistehend ausgebildet.

Wie in **Figur 5** zu erkennen ist, weist die Basis 10 einen modularen Aufbau auf. An einem Grundkörper 26 sind die vertikal verlaufende Säule 3 und zwei hier seitliche Adapter 27 befestigt an denen Linearlager 18, sowie zwei Koordinationsmittel 28 befestigt sind. Über unterschiedlich ausgestaltete Adapter kann die Drehvorrichtung 1 auf unterschiedliche Spritzgiessmaschinen angepasst werden. Bei Bedarf können die Adapter 27 auch so ausgestaltet sein, dass die Drehvorrichtung auf einem Maschinenbett einer Spritzgiessmaschine abgestützt werden kann. Die Koordinationsmittel 28 basieren in der gezeigten Ausführungsform auf Zahnstangen und bewirken, dass die Drehvorrichtung 1 beim Öffnen und Schliessen der Spritzgiessmaschine eine definierte Position zwischen den beiden Formaufspannplatten der Spritzgiessmaschine einnimmt.

An der Unterseite des Grundkörpers 26 sind Anschlüsse 29 für Medienleitungen zu erkennen. Die Anschlüsse 29 sind mit den ersten Kanälen 21 im Innern der Säule 3 wirkverbunden. In der gezeigten Ausführungsform trägt das Mittelteil 2 Formhälften 30 welche an Aussenflächen 31 des Mittelteils befestigt sind.

Wie in der Schnittdarstellung gemäss **Figur 7** zu erkennen ist, befindet sich der Antrieb 25 in dieser Ausführungsform im Bereich des unteren Endes der Säule 3 zwischen dem Sockel 10 und dem Mittelteil 2. Die ersten Nuten 20 sind hier säulenseitig angeordnet. Hülsenseitig sind zweite Kanäle 22 zu erkennen, welche in der Hülse 4 vertikal verlaufen und mit den ersten Nuten 20 wirkverbunden sind. Medien werden durch die ersten Kanäle 21 und die ersten Nuten 20 mit den zweiten Kanälen 22 ausgetauscht. Die zweiten Kanäle 22 stehen wiederum in Wirkverbindung mit weiteren, dritten Kanälen 33 im Mittelteil 2. In einer Ausführungsform wird die Wirkverbindung über das Ende der Hülse 4 über eine oder mehrere Übergabeplatten 32 oder andere Mittel hergestellt. Alternativ oder in Ergänzung können die Kanäle auch radial verlaufend angeordnet sein.

**Figur 8** zeigt eine Drehvorrichtung 1 mit einer Haltevorrichtung 40 für einen Mittelblock 41 von schräg oben. **Figur 9** zeigt dieselbe Drehvorrichtung 1 mit der Haltevorrichtung 40 und demselben Mittelblock 41 von schräg unten. Die Haltevorrichtung 40 umfasst eine untere und eine obere Traverse 42, 43 mit je einer Dreheinheit 44, 45, welche zur Halterung des Mittelblockes 41 dienen. Der Mittelblock 41 ist dabei um eine Drehachse 5 drehbar angeordnet. Die Traversen 42, 43 weisen hier einen modularen Aufbau auf, wie er in der int. Patentanmeldung WO2011/107395 derselben Anmelderin beschrieben ist, so dass diesbezüglich auf dieses Schutzrecht verwiesen wird. Um die Drehvorrichtung 1 in Längsrichtung (x-Richtung) zu verschieben weist die untere Traverse 42 Linearführungen 11 auf, welche auf einem Maschinenbett einer Spritzgiessmaschine abgestützt sind.

Andere Anordnungen sind möglich. Die obere Traverse 43 weist Linearlager 18 auf, mittels denen die obere Traverse 43 entlang von Holmen z.B. einer Spritzgiessmaschine (beide nicht dargestellt) gelagert sind.

Der Linearantrieb der Traversen 42, 43 in Längsrichtung (Richtung der Holmen der Spritzgiessmaschine, bzw. x-Richtung) erfolgt über zwei diagonal zueinander angeordnete elektrische Spindelantriebe 46, welche in der gezeigten Ausführungsform diagonal zueinander angeordnet sind. Sofern die Halterung des Mittelblockes nur über eine Traverse erfolgt, z.B. so wie in den Ausführungsformen gemäss den **Figuren 1-7** gezeigt, können die Spindelantrieben 46 auch links und rechts an der einen Traverse oder bei sehr kleinen und kostengünstigen Vorrichtungen bei Bedarf auch nur einseitig angebracht werden. Bei grösseren Werkzeugen können auch an allen Ecken Spindelantriebe 46 angeordnet werden.

Die Spindelantriebe 46 weisen je eine Spindel 47 auf, welche je mit einer Traverse 42, 43 drehfest wirkverbunden sind. Die Spindeln 47 durchlaufen eine Spindelmutter (nicht näher dargestellt) welche mit einem diese antreibenden Motor 48 wirkverbunden sind. Bei Bedarf kann ein Getriebe dazwischen geschaltet sein. Die Motoren 48 sind wiederum mit einer feststehenden oder einer beweglichen Formaufspannplatte und/oder einer Formhälfte (beide nicht näher dargestellt) wirkverbunden. Die Linearantriebe 46 dienen dazu, um über die Spindeln 47 die wirkverbundene Traverse 42, 43 relativ zu einer Formaufspannplatte in Längsrichtung (x-Richtung) zu bewegen.

Ein Drehantrieb 49 dient zum Drehen des Mittelblockes 41 um die Drehachse 5. Beim Drehantrieb 49 handelt es sich in der gezeigten Ausführungsform um einen Elektromotor. Hydraulische Antriebe sind möglich. Der Drehantrieb ist in der gezeigten Ausführungsform an der unteren Traverse 42 befestigt und mit einem unteren Drehteller 50 über eine Zahnradverbindung wirkverbunden. Bei Bedarf kann ein Reduktionsgetriebe dazwischen geschaltet sein. Ebenso besteht die Möglichkeit,

Unten ist der Mittelblock 41 durch den unteren Drehteller 50 und oben durch den oberen Drehteller 51 gehalten. Die Drehteller 50, 51 sind in der Regel in vertikaler Richtung (z-Richtung) lösbar mit dem Mittelblock 41 wirkverbunden. Auf der oberen Traverse 43 sind hier vier vertikal angeordnete elektrische Stellantriebe 52 zu erkennen, welche von oben her über eine mechanische Wirkverbindung zum Antrieb von Auswerferstiften 53 im Bereich von Kavitäten 54 an Seitenflächen 55 des Mittelblocks 41 dienen. Die mechanische Wirkerbindung ist so ausgestaltet, dass die Auswerferstifte zumindest in zwei oder vier Positionen in Aktion treten können. Dabei pressen sie von oben her auf die mechanische Wirkverbindung im Mittelblock welche wiederum die Auswerferstifte 53 einwirken, so dass sie nach vorne aus den Kavitäten heraus bewegt werden und damit das Auswerfen der hergestellten Teile bewirken, respektive dazu beitragen.

Ein Vorteil der gezeigten Anordnung besteht darin, dass für das lineare Verschieben in Längsrichtung, bzw. das Drehen des Mittelblockes 41 um die Drehachse 5, sowie zum Auswerfen der hergestellte Teile (nicht dargestellt) ausschliesslich elektrische Antriebe verwendet werden können, welche sehr präzise und schnell arbeiten. Ein weiterer Vorteil besteht darin, dass das Risiko von Leckage von Hydrauliköl reduziert wird. Ein weiterer Vorteil der gezeigten Ausführungsform besteht darin, dass weniger Hydraulikschläuche vorhanden sind. Ein weiterer Vorteil besteht darin, dass sich diese Technologie zum Einsatz in Reinräumen eignet.

Das in den **Figuren 8** und **9** gezeigte Antriebskonzept eignet sich für die Verwendung mit den Ausführungsformen gemäss den **Figuren 1** bis **7****.** Z.B. werden auf einer oder zwei Seiten elektrische Spindelantriebe mit einer oder mehreren Traversen 10, 17 wirkverbunden. Der Antrieb des Mittelblockes 2 erfolgt in diesem Fall über einen Elektromotor, welcher auf einer der Traversen oder auf dem Mittelblock befestigt ist und zumindest bezüglich seines Drehmomentes gegenüber der Säule 3 abgestützt ist.

**LISTE DER BEZUGSZEICHEN**

| | | | |
|---|---|---|---|
| 1 | Drehvorrichtung | 25 23 | zweite Nuten |
| 2 | Mittelteil (Mittelblock) | 24 | Aktuator |
| 3 | Säule | 25 | Antrieb |
| 4 | Hülse | 26 | Grundkörper |
| 5 | Drehachse | 27 | Adapter |
| 6 | erstes Radiallager | 28 | Koordinationsmittel |
| 7 | zweites Radiallager | 29 | Anschlusse (Schnellverschluss) |
| 8 | erstes Axiallager | 30 | Formhälfte |
| 9 | zweites Axiallager | 31 | Aussenfläche |
| 10 | Sockel / untere Traverse | 32 | Übergabeplatte |
| 11 | Linearführung (z.B. Schneebergerführung) | 33 | dritte Kanäle |
| | | 40 | Haltevorrichtung |
| 12 | Getriebe | 41 | M ittelblock |
| 13 | Sonnenrad | 42 | untere Traverse |
| 14 | Motor | 43 | obere Traverse |
| 15 | Hohlrad | 44 | untere Dreheinheit |
| 16 | Planetenrad | 45 | obere Dreheinheit |
| 17 | obere Traverse | 46 | Spindelantrieb (elektrisch) |
| 18 | Linearlager | 47 | Spindel |
| 19 | Innenwand | 48 | Motor (Linearantrieb) |
| 20 | erste Nuten | 49 | Drehantrieb |
| 21 | erste Kanäle (säulenseitig) | 50 | unterer Drehteller |
| 22 | zweite Kanäle (hülsenseitig) | 51 | oberer Drehteller |
| 52 | Stellantrieb | 54 | Kavität |
| 53 | Auswerferstifte | 55 | Seitenfläche |

## Patentansprüche

1. Vorrichtung umfassend einen Mittelteil (2) und eine Drehvorrichtung (1) zum Drehen des Mittelteils (2) in einer Spritzgiessvorrichtung, wobei der Mittelteil (2) mindestens zwei Seitenflächen zur Aufnahme von dritten Formhälften aufweist, welche mit ersten und zweiten Formhälften zur Bildung von Kavitäten zusammenwirken, wobei die Drehvorrichtung (1) eine im Innern des Mittelteils (2) drehfest angeordneten Säule (3) und eine die Säule (3) umgebenden mit dem Mittelteil rotierend angeordneten Hülse (4) aufweist, wobei die Hülse (4) und die Säule (3) über einen Antrieb (12, 14) wirkverbunden sind, **dadurch gekennzeichnet, dass** die Säule (3) am unteren Ende in einen Sockel (10) mündet, der Linearführungen (11) oder Linearlager (18) aufweist, so dass der Sockel auf einem Maschinenbett und/oder an Holmen einer Spritzgiessmaschine gelagert ist.

2. Vorrichtung gemäss Patentanspruch 1, **dadurch gekennzeichnet, dass** zwischen der Säule (3) und der Hülse (4) Nuten (22, 23) angeordnet sind, welche zum Austausch von flüssigen und/oder gasförmigen Medien zwischen der Säule (3) und dem Mittelteil (2) dienen.

3. Vorrichtung gemäss Patentanspruch 2, **dadurch gekennzeichnet, dass** die Säule (3) in Längsrichtung (z) verlaufende erste Kanäle (21) aufweisen, welche mit den Nuten (21) in Wirkverbindung stehen.

4. Vorrichtung gemäss einem der Patentansprüche 2 oder 3, **dadurch gekennzeichnet, dass** die Hülse zweite Kanäle (22) aufweist, welche mit Aktuatoren und/oder Kühlkreisläufen in Verbindung stehen.

5. Vorrichtung gemäss einem der vorangehenden Patentansprüche, **dadurch gekennzeichnet, dass** der Antrieb (12, 14) im Bereich eines oberen und/oder unteren Säulenendes angeordnet ist.

6. Vorrichtung gemäss einem der vorangehenden Patentansprüche, **dadurch gekennzeichnet, dass** der Antrieb einen Motor (14) und ein Getriebe (12) umfasst.

7. Vorrichtung gemäss Patentanspruch 6, **dadurch gekennzeichnet, dass** das Getriebe (12) ein Planetengetriebe ist.

8. Vorrichtung gemäss einem der vorangehenden Patentansprüche, **dadurch gekennzeichnet, dass** die Säule (3) und/oder die Hülse (4) mehrteilig ausgestaltet sind.

9. Vorrichtung gemäss einem der vorangehenden Patentansprüche, **dadurch gekennzeichnet, dass** zwischen der Säule (3) und der Hülse (4) Lager (6, 7) angeordnet sind.

10. Vorrichtung gemäss einem der vorangehenden Patentansprüche, **dadurch gekennzeichnet, dass** ein Motor (14) unterhalb und/oder oberhalb der Säule (3) angeordnet ist.

11. Vorrichtung gemäss einem der vorangehenden Patentansprüche, **dadurch gekennzeichnet, dass** ein Motor (14) mit dem Mittelteil (2) mitdrehend angeordnet ist.

12. Vorrichtung gemäss Patentanspruch 11, **dadurch gekennzeichnet, dass** der Motor (2) im Innern des Mittelteils angeordnet ist.

13. Vorrichtung gemäss einem der vorangehenden Patentansprüche, **dadurch gekennzeichnet, dass** der Motor (14) ein Hydraulik oder ein Elektromotor ist.

14. Spritzgiessmaschine mit einer Vorrichtung gemäss einem der vorangehenden Patentansprüche.

15. Spritzgiesswerkzeug mit Vorrichtung (1) gemäss einem der Patentansprüche 1 bis 12.

## Claims

1. Device comprising a middle part (2) and a rotating device (1) for rotating the middle part (2) in an injection-moulding device, the middle part (2) having at least two side faces for receiving third mould halves, which interact with first and second mould halves to form cavities, the rotating device (1) having a column (3) arranged rotationally fixed in the interior of the middle part (2) and a sleeve (4) arranged surrounding the column (3) and rotating with the middle part, the sleeve (4) and the column (3) being operatively connected by way of a drive (12, 14), **characterized in that** the column (3) opens out at the lower end into a base (10), which has linear guides (11) or linear bearings (18), so that the base (10) is mounted on a machine bed and/or on tie bars of an injection-moulding machine.

2. Device according to patent claim 1, **characterized in that** between the column (3) and the sleeve (4) there are arranged grooves (22, 23), which serve for the exchange of liquid and/or gaseous media between the column (3) and the middle part (2).

3. Device according to patent claim 2, **characterized in that** the column (3) has first channels (21), which run in the longitudinal direction (z) and are in operative connection with the grooves (21).

4. Device according to either of patent claims 2 or 3, **characterized in that** the sleeve has second channels (22), which are in connection with actuators and/or cooling circuits.

5. Device according to one of the preceding patent claims, **characterized in that** the drive (12, 14) is arranged in the region of an upper and/or lower end of the column.

6. Device according to one of the preceding patent claims, **characterized in that** the drive comprises a motor (14) and a gear mechanism (12).

7. Device according to patent claim 6, **characterized in that** the gear mechanism (12) is a planetary gear mechanism.

8. Device according to one of the preceding patent claims, **characterized in that** the column (3) and/or the sleeve (4) are of a multipart design.

9. Device according to one of the preceding patent claims, **characterized in that** bearings (6, 7) are arranged between the column (3) and the sleeve (4).

10. Device according to one of the preceding patent claims, **characterized in that** a motor (14) is arranged underneath and/or above the column (3).

11. Device according to one of the preceding patent claims, **characterized in that** a motor (14) is arranged co-rotating with the middle part (2).

12. Device according to patent claim 11, **characterized in that** the motor (2) is arranged in the interior of the middle part.

13. Device according to one of the preceding patent claims, **characterized in that** the motor (14) is a hydraulic or an electric motor.

14. Injection-moulding machine with a device according to one of the preceding patent claims.

15. Injection-moulding tool with a device (1) according to one of patent claims 1 to 12.

## Revendications

1. Dispositif comprenant une partie centrale (2) et un dispositif rotatif (1) pour faire tourner la partie centrale (2) dans un dispositif de moulage par injection, la partie centrale (2) présentant au moins deux faces latérales pour recevoir des troisièmes moitiés de moule qui coopèrent avec des premières et deuxièmes moitiés de moule pour former des cavités, le dispositif rotatif (1) présentant une colonne (3) disposée fixe par rapport à la rotation à l'intérieur de la partie centrale (2) et une douille (4) disposée autour de la colonne (3) et tournant avec la partie centrale, la douille (4) et la colonne (3) étant en liaison fonctionnelle par le biais d'un entraînement (12, 14), **caractérisé en ce que** la colonne (3) débouche à l'extrémité inférieure dans un socle (10) qui présente des guides linéaires (11) ou des paliers linéaires (18) de telle sorte que le socle soit supporté sur un lit de machine et/ou sur des longerons d'une machine de moulage par injection.

2. Dispositif selon la revendication 1, **caractérisé en ce qu'**entre la colonne (3) et la douille (4) sont disposées des rainures (22, 23) qui servent à échanger des milieux fluides et/ou gazeux entre la colonne (3) et la partie centrale (2).

3. Dispositif selon la revendication 2, **caractérisé en ce que** la colonne (3) présente des premiers canaux (21) s'étendant dans la direction longitudinale (z), qui sont en liaison fonctionnelle avec les rainures (21).

4. Dispositif selon l'une quelconque des revendications 2 ou 3, **caractérisé en ce que** la douille présente deux canaux (22) qui sont en liaison avec des actionneurs et/ou des circuits de refroidissement.

5. Dispositif selon l'une quelconque des revendications précédentes, **caractérisé en ce que** l'entraînement (12, 14) est disposé dans la région d'une extrémité de colonne supérieure et/ou inférieure.

6. Dispositif selon l'une quelconque des revendications précédentes, **caractérisé en ce que** l'entraînement comprend un moteur (14) et une transmission (12).

7. Dispositif selon la revendication 6, **caractérisé en ce que** la transmission (12) est une transmission planétaire.

8. Dispositif selon l'une quelconque des revendications précédentes, **caractérisé en ce que** la colonne (3) et/ou la douille (4) sont configurées en plusieurs parties.

9. Dispositif selon l'une quelconque des revendications précédentes, **caractérisé en ce qu'**entre la colonne (3) et la douille (4) sont disposés des paliers (6, 7).

10. Dispositif selon l'une quelconque des revendications précédentes, **caractérisé en ce qu'**un moteur (14) est disposé en dessous et/ou au-dessus de la colonne (3).

11. Dispositif selon l'une quelconque des revendications précédentes, **caractérisé en ce qu'**un moteur (14) est disposé de manière à tourner avec la partie centrale (2).

12. Dispositif selon la revendication 11, **caractérisé en ce que** le moteur (2) est disposé à l'intérieur de la partie centrale.

13. Dispositif selon l'une quelconque des revendications précédentes, **caractérisé en ce que** le moteur (14) est un moteur hydraulique ou un moteur électrique.

14. Machine de moulage par injection comprenant un dispositif selon l'une quelconque des revendications précédentes.

15. Outil de moulage par injection comprenant un dispositif (1) selon l'une quelconque des revendications 1 à 12.
